# EUROPÄISCHE PATENTSCHRIFT

(11) **EP 1 643 679 B1**
(45) Veröffentlichungstag und Bekanntmachung des Hinweises auf die Patenterteilung: **07.11.2007**
(21) Anmeldenummer: 04023200.1
(22) Anmeldetag: 29.09.2004
(51) Int. Cl.: H04L 12/24, G05B 19/042

(54) **Konfiguration von Baugruppen in Automatisierungssystemen**
Configuration of modules in automation systems
Configuration de modules dans des systèmes d'automatisation

(43) Veröffentlichungstag der Anmeldung: 05.04.2006
(73) Patentinhaber: SIEMENS AKTIENGESELLSCHAFT, 80333 München (DE)
(72) Erfinder: Pfister, Alexander, 91330 Eggolsheim (DE); Tiegelkamp, Michael, 90602 Pyrbaum (DE)

(56) Entgegenhaltungen:
- EP-A- 0 919 896
- WO-A-02/077732
- WO-A-03/019359
- DE-A1- 10 234 304

## Beschreibung

Die Erfindung betrifft ein aus mehreren Baugruppen bestehendes Automatisierungssystem und ein Verfahren zur Konfiguration der Baugruppen innerhalb des Automatisierungssystems.

Automatisierungssysteme umfassen häufig eine sehr große Anzahl vielfältiger Baugruppen oder Automatisierungsgeräte. In der Regel werden derartige Automatisierungssysteme und die zugehörigen Baugruppen mit einem Engineeringsystem projektiert. Bei dem Engineeringsystem handelt es sich beispielsweise um einen Personal Computer oder ein Programmiergerät, auf dem ein zur Programmierung Speicherprogrammierbarer Steuerungen geeignetes Softwarewerkzeug installiert ist.

Aufgrund der sehr hohen Anzahl und Vielfalt der unterstützten Baugruppen auf Seiten des Automatisierungssystems ergibt sich dementsprechend eine hohe Komplexität auf der Seite des Engineeringsystems, da dort alle Typen und Varianten von Baugruppen mit ihrem dynamischen Verhalten bekannt sein müssen.

Innerhalb des Gesamtsystems werden heute verschiedene Schnittstellen-Technologien benutzt: Beschreibungsdateien, die die Baugruppen als GSD, XML- oder proprietäre Dateien beschreiben, sowie Service-Beschreibungen wie z.B. Software-Treiber oder FDT/DTM, die die Funktionalität des Engineeringsystems ergänzen.

Derzeit etablieren sich im Markt der PC's bzw. der vernetzten Hausgeräte Plug&Play-Mechanismen wie UPnP, Jini u.a. Diese dienen zur Erleichterung der Konfiguration von Systemen. Neue Baugruppen werden von einem übergeordneten Host erkannt. Eine neue Baugruppe enthält zu diesem Zweck einen Identifikationscode, anhand dessen der Host den Typen der Baugruppe identifizieren kann und einen geeigneten Treiber laden kann, sofern dieser vom Betriebssystem zur Verfügung gestellt wird.

Aus DE 102 12 130 A1 ist eine Vorrichtung zur Datenübertragung für eine technische Anlage bekannt, bei der zur Aktualisierung und Übertragung von Treiberbausteinen ein Controller zur Steuerung eines Datenaustauschs über eine Datenübertragungseinheit mit einer Anzahl von an diese angebundene Peripheriemodulen vorgesehen ist. Zum Datenaustausch mit dem Controller ist dem jeweiligen Peripheriemodul ein zugehöriger Treiberbaustein zugeordnet, wobei das jeweilige Peripheriemodul derart ausgebildet ist, dass bei dessen Ankopplung an die Datenübertragungseinheit der Treiberbaustein an den Controller übertragbar ist.

Aus der WO 03/019359 A2 sind ein Verfahren und eine Anordnung zur Konfiguration von Baugruppen in einer Datenverarbeitungsanlage bekannt, bei dem bzw. der dezentrale und zentrale, unter einander vernetzte Baugruppen eine speicherprogrammierbare Steuerung von Anlagenfunktionen übernehmen. Anlagenseitige Baugruppen weisen jeweils einen Konfigurationsbaustein auf, mit dem eine Projektierung und/oder Parametrierung der jeweiligen Baugruppe im Hinblick auf die zu steuernde Funktion durchgeführt wird.

Der Erfindung liegt die Aufgabe zu Grunde, ein einfach und betriebssicher zu konfigurierendes Automatisierungssystem sowie ein Verfahren zur einfachen und betriebssicheren Konfiguration eines Automatisierungssystems anzugeben.

Diese Aufgabe wird durch ein Automatisierungssystem mit mindestens einer ersten und mindestens einer zweiten Baugruppe gelöst, wobei die beiden Baugruppen in einer hierarchischen Ordnung zueinander stehen und die erste Baugruppe zumindest eine hierarchisch abwärtsgerichtete Schnittstelle aufweist und die zweite Baugruppe
- zumindest eine hierarchisch aufwärtsgerichtete Schnittstelle,
- mindestens eine Beschreibungsdatei mit Informationen über die zweite Baugruppe und
- mindestens einen Gerätetreiber, der einen Zugriff auf die zweite Baugruppe durch die erste Baugruppe oder eine der ersten Baugruppe hierarchisch neben- oder übergeordnete Baugruppe ermöglicht,
aufweist, wobei die hierarchisch abwärtsgerichtete Schnittstelle der ersten Baugruppe mit der hierarchisch aufwärtsgerichteten Schnittstelle der zweiten Baugruppe derart koppelbar ist, dass der Gerätetreiber und die Beschreibungsdatei der zweiten Baugruppe von der ersten Baugruppe oder einer der ersten Baugruppe hierarchisch neben- oder übergeordneten Baugruppe zugreifbar ist und eine Konfiguration der zweiten Baugruppe durch die erste Baugruppe oder eine der ersten Baugruppe hierarchisch neben- oder übergeordnete Baugruppe vorgesehen ist.

Diese Aufgabe wird ferner durch ein Verfahren zur Konfiguration eines Automatisierungssystems mit mindestens einer ersten und mindestens einer zweiten Baugruppe gelöst, wobei die beiden Baugruppen in einer hierarchischen Ordnung zueinander stehen und die erste Baugruppe zumindest eine hierarchisch abwärtsgerichtete Schnittstelle aufweist und die zweite Baugruppe
- zumindest eine hierarchisch aufwärtsgerichtete Schnittstelle,
- mindestens eine Beschreibungsdatei mit Informationen über die zweite Baugruppe und
- mindestens einen Gerätetreiber, der einen Zugriff auf die zweite Baugruppe durch die erste Baugruppe oder eine der ersten Baugruppe hierarchisch neben- oder übergeordnete Baugruppe ermöglicht,
aufweist, wobei die hierarchisch abwärtsgerichtete Schnittstelle der ersten Baugruppe mit der hierarchisch aufwärtsgerichteten Schnittstelle der zweiten Baugruppe derart gekoppelt wird, dass auf den Gerätetreiber und die Beschreibungsdatei der zweiten Baugruppe von der ersten Baugruppe oder einer der ersten Baugruppe hierarchisch neben- oder übergeordneten Baugruppe zugegriffen wird und die zweite Baugruppe durch die erste Baugruppe oder eine der ersten Baugruppe hierarchisch neben- oder übergeordnete Baugruppe konfiguriert wird.

Die Baugruppen des erfindungsgemäßen Automatisierungssystems sind in der Lage, sich untereinander selbst zu verwalten. Hierzu weisen die einzelnen Baugruppen, die in einer hierarchischen Ordnung zueinander stehen, auf- und/oder hierarchisch abwärtsgerichtete Schnittstellen auf, über die ein Datenfluss zwischen den einzelnen Baugruppen ermöglicht wird.

Weiterhin umfasst zumindest ein Teil der Baugruppen des erfindungsgemäßen Automatisierungssystems den Gerätetreiber, der zum Betrieb der jeweiligen Baugruppe benötigt wird und die Beschreibungsdatei. Die auf der zweiten Baugruppe abgelegte Beschreibungsdatei beschreibt die zweite Baugruppe in Form einer GSD, XML- oder proprietären Datei. Hier werden u. a. Konfigurationsinformationen über die zweite Baugruppe abgelegt.

Die erste Baugruppe ist innerhalb des erfindungsgemäßen Automatisierungssystems hierarchisch über der zweiten Baugruppe angeordnet. Die in der Beschreibungsdatei abgelegten Konfigurationsinformationen können von der ersten Baugruppe oder einer der ersten Baugruppe hierarchisch neben- oder übergeordneten Baugruppe eingelesen werden. Dies ermöglicht es der ersten Baugruppe, die zweite Baugruppe zu verwalten. Man kann also die erste Baugruppe als Master und die zweite Baugruppe als Slave betrachten. Im Folgenden sollen daher auch die Synonyme Master und Slave für die erste und die zweite Baugruppe verwendet werden.

Der Master kann z. B. die Konfiguration bzw. die Parametrierung des Slaves vornehmen, wenn der Slave dem Automatisierungssystem zugefügt wird. Sobald der Slave an einen dem Automatisierungssystem zugeordneten Bus angeschlossen wird, meldet er sich bei der ersten Baugruppe, dem Master, an. Hierbei wird der Master in seinem zyklischen Betrieb jedoch nicht gestört. Sobald der Master den neuen Slave erkennt und der zyklische Betrieb des Masters innerhalb des Automatisierungssystems es zulässt, greift der Master auf die Beschreibungsdatei des Slaves zu, um die für die Konfiguration des Slaves notwendigen Information über die zweite Baugruppe zu bekommen. Ebenfalls unter Berücksichtung eines störungsfreien Betriebes des Automatisierungssystems konfiguriert die Master-Baugruppe anschließend den Slave auf Basis der in der Beschreibungsdatei abgelegten Informationen. Erst dann wird der Slave innerhalb des Automatisierungsgerätes aktiv.

Ein entscheidender Vorteil des erfindungsgemäßen Automatisierungssystems ist die von der Masterbaugruppe gesteuerte Konfiguration der Slave-Baugruppe. Die Slave-Baugruppe bleibt, nachdem sie mit dem Bus des Automatisierungssystems verbunden wurde, zunächst passiv. Eine automatische Übertragung der Beschreibungsdatei oder des Gerätetreibers, die durch den Slave getriggert würde, ist insbesondere im Automatisierungsumfeld nicht gewollt, da durch diese ein Belastung am Bus entstehen würde, die einen störungsfreien Betrieb des Automatisierungssystems gefährden würde. Daher wird in dem erfindungsgemäßen Automatisierungssystem die Konfiguration des Slaves von einer übergeordneten und schon im Betrieb befindlichen Baugruppe, dem Master oder einer dem Master hierarchisch neben- oder übergeordneten Baugruppe, durchgeführt. Der Master bzw. die hierarchisch dem Master neben- oder übergeordnete Baugruppe prüft zunächst, ob die neue unterlagerte Baugruppe keinen störenden Einfluss auf die Aktualisierung von Daten- und Kommunikation der schon im Betrieb befindlichen Baugruppen hat. Unter Umständen wird die mit dem Hinzufügen der neunen Baugruppe, des Slaves, initiierte Konfigurationsänderung abgelehnt, oder sie ist nur in Verbindung mit einem manuellen Eingriff durch einen Anwender durchführbar.

Der Master bzw. der dem Master hierarchisch über- oder nebengeordneten Baugruppe kann zum Beispiel einen Controller für das Automatisierungssystem aufweisen. Gerade im Automatisierungsumfeld können auch mehrere Controller am Gesamtsystem beteiligt sein. Die Konfiguration des Slaves kann hierbei prinzipiell einem beliebigen Controller obliegen, wobei dieser Controller auch mehrere Hierarchieebenen über dem Slave innerhalb des Automatisierungssystems angeordnet sein kann.

Denkbar ist auch, dass mehrere Controller an der Konfiguration des Slaves beteiligt sind.

Insbesondere wenn die zweite Baugruppe und/oder der zweiten Baugruppe hierarchisch nebengeordnete Baugruppen und/oder hierarchisch untergeordnete Baugruppen keine eigene Verarbeitungseinheit wie z. B. einen Controller aufweisen, ist es zweckmäßig, dass die erste Baugruppe eine Verarbeitungseinheit aufweist, die zur Ausführung des Gerätetreibers der zweiten Baugruppe und/oder der zweiten Baugruppe hierarchisch nebengeordneter Baugruppen und/oder hierarchisch untergeordneter Baugruppen vorgesehen ist.

In einer vorteilhaften Ausführungsform des erfindungsgemäßen Automatisierungssystems weist die zweite Baugruppe eine weitere Verarbeitungseinheit auf, die zur Ausführung des Gerätetreibers der zweiten Baugruppe vorgesehen ist. In diesem Fall muss der Gerätetreiber nicht von der zweiten Baugruppe in eine hierarchisch übergeordnete Baugruppe geladen werden sondern kann direkt auf der weiteren Verarbeitungseinheit, die eine Komponente der zweiten Baugruppe bildet, beispielsweise ein Controller, ausgeführt werden. Selbstverständlich ist auch eine Konfiguration von Baugruppen mit und ohne eigene Verarbeitungseinheit innerhalb des Automatisierungssystems möglich und von der Erfindung umfasst.

In einer vorteilhaften Ausführung der Erfindung weist die erste Baugruppe einen generischen Gerätetreiber aufweist, der auf die zweite Baugruppe und/oder eine der zweiten Baugruppe neben- und/oder untergeordnete Baugruppe adaptierbar ist. In diesem Fall muss auf der zweiten Baugruppe bzw. auf einer dieser neben- oder untergeordneten Baugruppe überhaupt kein Gerätetreiber installiert sein. Durch Auswertung der Beschreibungsdatei der der ersten Baugruppe untergeordneten Baugruppe kann der generische Gerätetreiber auf diese untergeordnete Baugruppe angepasst werden.

Insbesondere wenn die zweite Baugruppe keine eigene Verarbeitungseinheit aufweist, ist es vorteilhaft, dass die Beschreibungsdatei und/oder der Gerätetreiber der zweiten Baugruppe in die erste Baugruppe oder eine der ersten Baugruppe hierarchisch neben- oder übergeordnete Baugruppe ladbar ist. In diesem Fall werden die entsprechenden Gerätetreiber der zweiten Baugruppe von einer hierarchisch innerhalb des Automatisierungssystems über der zweiten Baugruppe angeordneten Baugruppe ausgeführt.

Selbstverständlich ist das erfindungsgemäße Automatisierungssystem keinesfalls auf zwei Hierarchieebenen limitiert. Insbesondere bei einer erfindungsgemäßen Ausführungsform des Automatisierungssystems mit drei oder mehr Hierarchieebenen ist es zweckmäßig, dass die zweite Baugruppe mindestens eine weitere hierarchisch abwärtsgerichtete Schnittstelle aufweist, über die die zweite Baugruppe mit einer dritten Baugruppe mit
- zumindest einer weiteren hierarchisch aufwärtsgerichteten Schnittstelle
- mindestens einer weiteren Beschreibungsdatei mit Informationen über die dritte Baugruppe und
- mindestens einem Gerätetreiber, der einen Zugriff auf die dritte Baugruppe durch die zweite Baugruppe oder eine der zweiten Baugruppe hierarchisch neben- oder übergeordnete Baugruppe ermöglicht,
koppelbar ist und eine Konfiguration der dritten Baugruppe durch die zweite Baugruppe oder eine der zweiten Baugruppe hierarchisch nebengeordnete Baugruppe oder übergeordnete Baugruppe vorgesehen ist.

Auch die dritte Baugruppe kann in dieser erfindungsgemäßen Ausführungsform zusätzlich mindestens eine weitere hierarchisch abwärtsgerichtete Schnittstelle aufweisen, über die die dritte Baugruppe schließlich mit einer vierten Baugruppe mit zumindest einer weiteren hierarchisch aufwärtsgerichteten Schnittstelle koppelbar ist und eine Konfiguration der vierten Baugruppe durch die dritte Baugruppe oder eine der dritten Baugruppe hierarchisch nebengeordnete Baugruppe oder übergeordnete Baugruppe vorgesehen ist. Ebenso kann die vierte Baugruppe eine Beschreibungsdatei mit Informationen über die vierte Baugruppe und einen Gerätetreiber, der einen Zugriff auf die vierte Baugruppe ermöglicht, aufweisen. Auf diese Weise ist eine beliebige hierarchische Schachtelung von Baugruppen möglich und von der Erfindung umfasst.

Die zweite Baugruppe erfüllt in dieser Ausführungsform der Erfindung sowohl eine Masterrolle, nämlich gegenüber der dritten Baugruppe bzw. einer der dritten Baugruppe neben- oder untergeordneten Baugruppe, als auch eine Slaverolle, nämlich gegenüber der ersten Baugruppe oder einer der ersten Baugruppe hierarchisch neben- oder übergeordneten Baugruppe. Im dynamischen Ablauf des Automatisierungssystems meldet sich beispielsweise die zweite Baugruppe erst dann bei der ersten Baugruppe oder einer der ersten Baugruppe neben- oder übergeordneten Baugruppe an, nachdem die zweite Baugruppe die Konfiguration aller unterlagerten Baugruppen übernommen hat.

Vorteilhafterweise wird die Parametrierung von der ersten Baugruppe oder einer der ersten Baugruppe hierarchisch neben- oder übergeordneten Baugruppe zur dritten Baurgruppe oder einer dieser neben- oder untergeordneten Baugruppe über die zweite Baugruppe weitergereicht. Eine zum Betrieb der unterlagerten Baugruppen notwendige Modifikation der Parametrierung der dritten Baugruppe kann eigenständig durch die zweite Baugruppe erfolgen.

Die Konfiguration der dritten Baugruppe hat nicht zwangsläufig durch die zweite, also die in der Hierarchie direkt über der dritten Baugruppe angeordnete Baugruppe, zu erfolgen. Die dritte Baugruppe kann auch durch die erste Baugruppe oder eine hierarchisch noch höher angesiedelte Baugruppe innerhalb des Automatisierungssystems konfiguriert werden.

In einer vorteilhaften Ausführungsform der Erfindung ist die erste Baugruppe mit einem Engineeringsystem koppelbar, welches zur Programmierung und Projektierung des Automatisierungssystems vorgesehen ist. Mit Hilfe des Engineeringsystems können die Steuerungen der Baugruppen programmiert werden und die steuerungsseitige Hardware konfiguriert werden. Darüber hinaus eignet sich das Engineeringsystem zur Inbetriebsetzung, Fehlerdiagnose und Wartung des Automatisierungssystems.

Bei der Konfiguration eines in der Realität noch nicht aufgebauten oder noch nicht vollständig aufgebauten Automatisierungssystems können zweckmäßigerweise Softwaremodule eingesetzt werden, die die später einzusetzenden Baugruppen in der Projektierungsphase vertreten. Diese Stellvertreter sollten in Bezug auf die ausgeführte Funktion mit den eigentlichen Baugruppen möglichst identisch sein.

In einer vorteilhaften Gestaltungsform des erfindungsgemäßen Automatisierungssystems sind die zweite Baugruppe und/oder die dritte Baugruppe im laufenden Betrieb des Automatisierungssystems installierbar, wobei eine Inbetriebnahme der zweiten und/oder der dritten Baugruppe durch eine der jeweiligen Baugruppe hierarchisch übergeordnete Baugruppe vorgesehen ist. Sobald die zweite oder die dritte Baugruppe am Bussystem angeschlossen werden, übernimmt zum Beispiel die erste Baugruppe deren Inbetriebnahme. Vorraussetzung für eine Inbetriebnahme der neuen Baugruppe ist jedoch, dass der zyklische Betrieb der ersten Baugruppe sowie der Betrieb des Automatisierungssystems nicht gestört werden. Dies wird vor der Inbetriebnahme insbesondere durch die erste Baugruppe geprüft.

Im Folgenden wird die Erfindung anhand der in den Figuren dargestellten Ausführungsbeispiele näher beschrieben und erläutert. Es zeigen:
- FIG 1: eine Konfiguration zweier Baugruppen innerhalb eines Automatisierungssystems,
- FIG 2: eine erfindungsgemäße Ausführungsform eines Automatisierungssystems mit drei Hierarchieebenen und einem Engineeringsystem,
- FIG 3: eine mit einer übergeordneten ersten Baugruppe und einer untergeordneten dritten Baugruppe kommunizierende zweite Baugruppe 2 und
- FIG 4: ein Multicontrollerautomatisierungssystem.

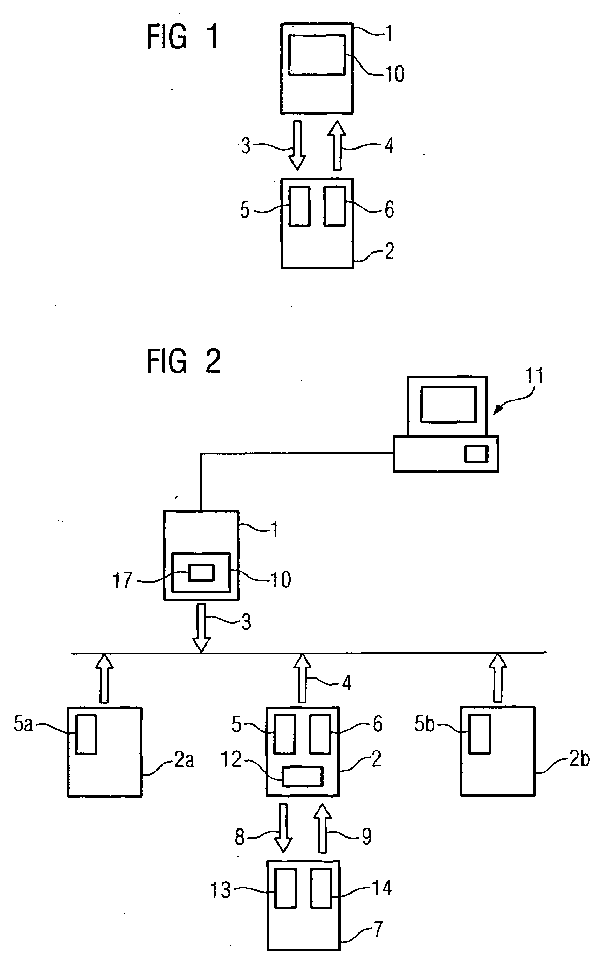

FIG 1 zeigt eine Konfiguration zweier Baugruppen 1,2 innerhalb eines Automatisierungssystems in einer erfindungsgemäßen Ausführung. Eine erste Baugruppe 1 weist eine hierarchisch abwärtsgerichtete Schnittstelle 3 und eine zweite Baugruppe 2 weist eine hierarchisch aufwärtsgerichtete Schnittstelle 4 auf. Die beiden Baugruppen 1,2 sind über diese Schnittstellen 3,4 miteinander gekoppelt, um einen Datenfluss zwischen den beiden Baugruppen 1,2 zu ermöglichen. Die erste Baugruppe 1 ist hierarchisch innerhalb des Automatisierungssystems über der zweiten Baugruppe 2 angeordnet.

Die zweite Baugruppe 2 umfasst zum einen eine Beschreibungsdatei 5, in der Informationen über die zweite Baugruppe 2 abgelegt sind. Zum anderen weist die zweite Baugruppe 2 einen Gerätetreiber 6 auf, der einen Betrieb der zweiten Baugruppe 2 innerhalb des Automatisierungssystems ermöglicht. Darüber hinaus können auf der zweiten Baugruppe 2 Daten zur Selbstidentifikation der zweiten Baugruppe 2 sowie Parameterdaten abgelegt sein. Die Beschreibungsdatei 5, der Gerätetreiber 6, die Parameter und die Daten zur Selbstidentifikation können von einer im Folgenden als Baugruppenhandler bezeichneten Softwarekomponente umfasst sein. Selbstverständlich kann auch die erste Baugruppe 1 einen derartigen Baugruppenhandler aufweisen.

Die erste Baugruppe 1 verfügt ferner über eine Verarbeitungseinheit 10. Wird beispielsweise die zweite Baugruppe 2 an die erste Baugruppe 1 angekoppelt, meldet sich die zweite Baugruppe 2 zunächst innerhalb des Automatisierungssystems am Bus an. Die erste Baugruppe 1 registriert diese Anmeldung und greift auf die Beschreibungsdatei 5 der zweiten Baugruppe 2 zu. Die Anmeldung am Bus und der Zugriff auf die Beschreibungsdatei 5 geschehen immer unter der Vorraussetzung, dass durch diese Aktionen der zyklische Betrieb des Automatisierungssystems nicht gestört wird.

Anschließend konfiguriert die erste Baugruppe 1 die zweite Baugruppe 2 unter zur Hilfenahme der Informationen aus der Beschreibungsdatei 5. Der Gerätetreiber 6 wird in die Verarbeitungseinheit 10 der ersten Baugruppe 1 geladen und die zweite Baugruppe 2 wird als Slave der ersten Baugruppe 1 in Betrieb genommen.

Alternativ kann aber auch ein generischer Gerätetreiber auf der ersten Baugruppe 1 vorhanden sein, mit dem die zweite Baugruppe 2 betrieben werden kann. Der generische Treiber der ersten Baugruppe 1 wertet hierzu zunächst die Beschreibungsdatei aus. In diesem Fall muss die zweite Baugruppe 2 nicht zwangsläufig über einen eigenen Treiber verfügen und in Folge dessen diesen auch nicht über den Bus in die erste Baugruppe 1 laden.

FIG 2 zeigt eine erfindungsgemäße Ausführungsform eines Automatisierungssystems mit drei Hierarchieebenen und einem Engineeringsystem 11. Eine erste Baugruppe 1 dient als Master des gesamten Automatisierungssystems und ist folglich in der obersten Hierarchieebene angeordnet. Zur Projektierung des Automatisierungssystems ist der Master 1 mit dem Engineeringsystem 11 verbunden, mit dem ein Anwender manuellen Zugriff auf das Gesamtsystem zum Beispiel zu Projektierungszwecken nehmen kann.

Innerhalb des Masters befindet sich eine Verarbeitungseinheit 10, die im Folgenden auch als Controller bezeichnet werden soll. In dem Controller 10 kann z. B. ein generischer Treiber 17 liegen, mit dem unterlagerte Baugruppen 2,2a,2b,7 betrieben werden können. Hierzu greift der Master 1 zunächst auf Beschreibungsdateien 6,6a,6b,13 unterlagerten Baugruppen zu. Alternativ können die unterlagerten Baugruppen 2,2a,2b,7 aber auch eigene Verarbeitungseinheiten aufweisen, mit denen die Gerätetreiber der jeweiligen Baugruppen oder den jeweiligen Baugruppen unterlagerter Baugruppen ausgeführt werden. Beispielhaft ist dies für eine zweite Baugruppe 2 gezeichnet, die eine weitere Verarbeitungseinheit 12 sowie einen Gerätetreiber 6 und die Beschreibungsdatei 5 aufweist. Mit der weiteren Verarbeitungseinheit 12 führt die Baugruppe ihren Gerätetreiber 6 aus.

In der zweiten Hierarchieebene befinden sich neben der zweiten Baugruppe 2 noch zwei weitere, der zweiten Baugruppe nebengeordnete Baugruppen 2a,2b, die von dem Master 1 bzw. dem Controller 10 des Masters 1 verwaltet werden.

Die zweite Baugruppe 2 weist neben einer hierarchisch aufwärtsgerichteten Schnittstelle 4 auch eine hierarchisch abwärtsgerichtete Schnittstelle 8 auf. Über die hierarchisch abwärtsgerichtete Schnittstelle 8 ist die zweite Baugruppe 2 mit einer weiteren hierarchisch aufwärtsgerichteten Schnittstelle 9 einer dritten Baugruppe 7 verbunden. Die dritte Baugruppe 7 weist wiederum eine weitere Beschreibungsdatei 13 zur Beschreibung der dritten Baugruppe 7 und einen weiteren Gerätetreiber 14 auf. Die dritte Baugruppe 7 wird von der zweiten Baugruppe 2 verwaltet.

Wird die dritte Baugruppe 7 beispielsweise nachträglich an das Automatisierungssystem angebunden, meldet sich die dritte Baugruppe 7 zunächst bei der zweiten Baugruppe 2 an. Anschließend übernimmt die zweite Baugruppe 2 die Konfiguration der dritten Baugruppe 7 auf Basis der in der weiteren Beschreibungsdatei 13 abgelegten Informationen über die dritte Baugruppe 7. Bei diesem Vorgang haben zyklische Vorgänge innerhalb des Automatisierungssystems eine höhere Priorität, um einen störungsfreien Betrieb des Gesamtsystems sicherzustellen.

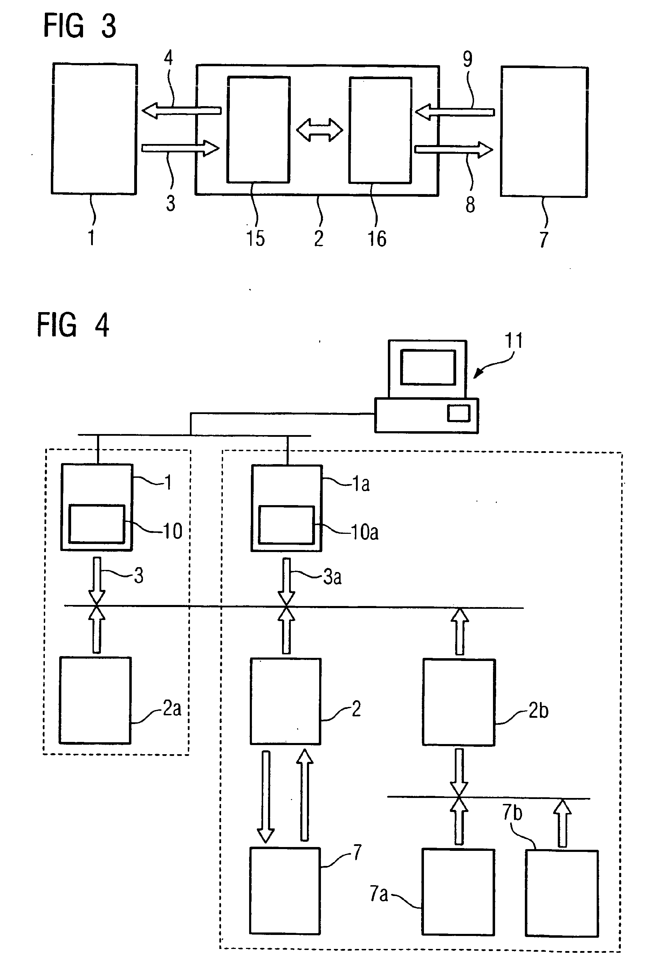

FIG 3 zeigt eine mit einer übergeordneten ersten Baugruppe 1 und einer untergeordneten dritten Baugruppe 7 kommunizierende zweite Baugruppe 2. In dieser erfindungsgemäßen Konfiguration von Baugruppen innerhalb eines Automatisierungssystems erfüllt die erste Baugruppe 1 die Aufgabe eines Masters und die dritte Baugruppe die Aufgabe eines Slaves. Die zweite Baugruppe 2 kann als Slave/Master-Baugruppe angesehen werden und stellt ein Bindeglied zwischen der Hierarchieebene des Masters 1 und des Slaves 7 dar, indem sie Daten, die von Baugruppen der Hierarchieebene des Slaves 7 stammen nach oben hin verdichtet.

Die Besonderheit der Slave/Master-Baugruppe 2 besteht darin, dass sie eine Slavekomponente 15 und eine Masterkomponente 16 aufweist, wobei die Slavekomponente 15 als Stellvertreter für alle unterlagerten Baugruppen fungiert. In dem dargestellten Ausführungsbeispiel ist nur die dritte Baugruppe 7 für die der Slave/Master-Baugruppe 2 unterlagerte Hierarchieebene eingezeichnet. Natürlich können noch weitere Baugruppen der dritten Baugruppe 7 neben oder untergeordnet sein, die von der Slave/Master-Baugruppe 2 alle zum Master 1 hin vertreten werden. Bei einer Konfiguration des Systems bzw. seiner Baugruppen meldet sich die Slavekomponente 15 erst dann beim überlagerten Master 1, wenn sie alle Informationen der unterlagerten Baugruppen übernommen hat.

Einen Parametrierung der unterlagerten Baugruppen wird von dem überlagerten Master 1 über die Slave/Master-Baugruppe 2 an die unterlagerte dritte Baugruppe 7 bzw. der dritten Baugruppe neben- oder untergeordnete Baugruppen weitergereicht. Die Masterkomponente 16 der Slave/Master-Baugruppe 2 kann eigenständig Modifikationen, die zum Betrieb der unterlagerten Baugruppen notwendig sind, durchführen.

FIG 4 zeigt ein Multicontrollerautomatisierungssystem. Bei dieser erfindungsgemäßen Ausführungsform sind in der obersten Hierarchieebene des Automatisierungssystems eine erste Baugruppe 1 und eine der ersten Baugruppe nebengeordnete Baugruppe 1a angeordnet, wobei beide Baugruppen 1,1a über eine eigene Verarbeitungseinheit 10,10a verfügen. Die Verarbeitungseinheit 10,10a werden im Folgenden auch als Controller und die ersten Baugruppe 1 sowie deren nebengeordnete Baugruppe 1a als Masterbaugruppen bezeichnet.

Den Masterbaugruppen 1,1a unterlagert sind eine zweite Baugruppe 2 sowie der zweiten Baugruppe 2 nebengeordnete Baugruppen 2a,2b. Die zweite Baugruppe 2 ist mit einer dritten Baugruppe 7 gekoppelt, die der zweiten Baugruppe 2 hierarchisch unterlagert ist. Sie erfüllt die Funktion einer Slave/Master-Baugruppe gemäß der Ausführungen zu FIG 3. Bei einer der zweiten Baugruppe 2 nebengeordneten Baugruppe 2a handelt es sich um eine Slavebaugruppe und bei der anderen der zweiten Baugruppe 2 nebengeordneten Baugruppe 2b handelt es sich um eine weitere Slave/Master-Baugruppe. Der weiteren Slave/Master-Baugruppe 2b sind eine zwei weitere dritte Baugruppen 7a,7b unterlagert. Der Informationsfluss von den der dritten Baugruppe nebengeordneten Baugruppen 7a,7b wird zu einem zuständigen Controller wird von der weiteren Slave/Master-Baugruppe 2b zur obersten Hierarchieebene hin verdichtet.

Mit Hilfe eines Engineeringsystems 11 kann eine Anwender die Zuordnung der den Mastern 1,1a unterlagerten Baugruppen 2,2a, 2b,7,7a,7b zu den Mastern 1,1a bestimmen. Wird im Betrieb eine neue Baugruppe hinzugefügt, meldete sich diese bei beiden Mastern 1,1a zunächst als neue Baugruppe an. Sie bleibt aber solange passiv, bis eine eindeutige Zuordnung zu einem der Master 1,1a getroffen wurde.

Durch vordefinierte Regeln kann die Anwenderentscheidung, welchem Master 1,1a eine neue Baugruppe zuzuordnen ist, vor Inbetriebnahme der Anlage getroffen werden, so dass ein Anwendereingriff im laufenden Betrieb der Anlage nicht notwendig ist.

Ohne derartige vordefinierte Regeln kann eine Konfigurationsanfrage der neuen Baugruppe von ihrer Hierarchieebene sukzessive nach oben weitergegeben werden, bis die schließlich für den Anwender beispielsweise am Engineeringsystem 11 sichtbar gemacht wird.

Zusammenfassend betrifft die Erfindung ein aus mehreren Baugruppen bestehendes Automatisierungssystem und ein Verfahren zur Konfiguration der Baugruppen innerhalb des Automatisierungssystems. Um eine einfache und betriebssichere Konfiguration des Automatisierungssystems zu erzielen, sind die Baugruppen über Schnittstellen in einer hierarchischen Ordnung untereinander verbunden. Hierarchisch übergeordnete Baugruppen können auf Beschreibungsdateien und Gerätetreiber hierarchisch untergeordneter Baugruppen zugreifen und anhand der Informationen innerhalb der Beschreibungsdateien die untergeordneten Baugruppen konfigurieren, wobei jede Baugruppen selbst Speicherort ihres jeweiligen Gerätetreibers und ihrer Beschreibungsdatei ist.

## Patentansprüche

1. Automatisierungssystem mit mindestens einer ersten (1) und mindestens einer zweiten Baugruppe (2), wobei die beiden Baugruppen (1,2) in einer hierarchischen Ordnung zueinander stehen und die erste Baugruppe (1) zumindest eine hierarchisch abwärtsgerichtete Schnittstelle (3) aufweist und die zweite Baugruppe (2)
• zumindest eine hierarchisch aufwärtsgerichtete Schnittstelle (4) und
• mindestens eine Beschreibungsdatei (5) mit Informationen über die zweite Baugruppe (2) aufweist, **dadurch gekennzeichnet, dass** die zweite Baugruppe (2)
mindestens einen Gerätetreiber (6), der einen Zugriff auf die zweite Baugruppe (2) durch die erste Baugruppe (1) oder eine der ersten Baugruppe (1) hierarchisch neben- oder übergeordnete Baugruppe ermöglicht,
aufweist, wobei die hierarchisch abwärtsgerichtete Schnittstelle (3) der ersten Baugruppe (1) mit der hierarchisch aufwärtsgerichteten Schnittstelle (4) der zweiten Baugruppe (2) derart koppelbar ist, dass der Gerätetreiber (6) und die Beschreibungsdatei (5) der zweiten Baugruppe (2) von der ersten Baugruppe (1) oder einer der ersten Baugruppe (1) hierarchisch neben- oder übergeordneten Baugruppe zugreifbar ist und eine Konfiguration der zweiten Baugruppe (2) durch die erste Baugruppe (1) oder eine der ersten Baugruppe (1) hierarchisch neben- oder übergeordnete Baugruppe vorgesehen ist.

2. Automatisierungssystem nach Anspruch 1,
**dadurch gekennzeichnet, dass** die erste Baugruppe (1) eine Verarbeitungseinheit (10) aufweist, die zur Ausführung des Gerätetreibers (6) der zweiten Baugruppe (2) und/oder der zweiten Baugruppe hierarchisch nebengeordneten Baugruppen (2a,2b) und/oder hierarchisch untergeordneten Baugruppen (7) vorgesehen ist.

3. Automatisierungssystem nach einem der Ansprüche 1 oder 2,
**dadurch gekennzeichnet, dass** die zweite Baugruppe (2) eine weitere Verarbeitungseinheit (12) aufweist, die zur Ausführung des Gerätetreibers (6) der zweiten Baugruppe (2) vorgesehen ist.

4. Automatisierungssystem nach einem der vorhergehenden Ansprüche,
**dadurch gekennzeichnet, dass** die erste Baugruppe (1) einen generischen Gerätetreiber (17) aufweist, der auf die zweite Baugruppe (2) und/oder eine der zweiten Baugruppe neben-(2a,2b) und/oder untergeordnete Baugruppe (7) adaptierbar ist.

5. Automatisierungssystem nach einem der vorhergehenden Ansprüche,
**dadurch gekennzeichnet, dass** die Beschreibungsdatei (5) und/oder der Gerätetreiber (6) der zweiten Baugruppe (2) in die erste Baugruppe (1) oder eine der ersten Baugruppe (1) hierarchisch neben- oder übergeordnete Baugruppe ladbar ist.

6. Automatisierungssystem nach einem der vorhergehenden Ansprüche,
**dadurch gekennzeichnet, dass** die zweite Baugruppe (2) mindestens eine weitere hierarchisch abwärtsgerichtete Schnittstelle (8) aufweist, über die die zweite Baugruppe (2) mit einer dritten Baugruppe (7) mit
• zumindest einer weiteren hierarchisch aufwärtsgerichteten Schnittstelle (9)
• mindestens einer weiteren Beschreibungsdatei (13) mit Informationen über die dritte Baugruppe (7) und
• mindestens einem Gerätetreiber (14), der einen Zugriff auf die dritte Baugruppe (7) durch die zweite Baugruppe (2) oder eine der zweiten Baugruppe (2) hierarchisch neben- oder übergeordnete Baugruppe (1,2a,2b) ermöglicht,
koppelbar ist und eine Konfiguration der dritten Baugruppe (7) durch die zweite Baugruppe (2) oder eine der zweiten Baugruppe (2) hierarchisch nebengeordnete Baugruppe (2a,2b) oder übergeordnete Baugruppe (1) vorgesehen ist.

7. Automatisierungssystem nach Anspruch 6,
**dadurch gekennzeichnet, dass** die zweite Baugruppe (2) und/oder die dritte Baugruppe (7) im laufenden Betrieb des Automatisierungssystems installierbar sind, wobei eine Inbetriebnahme der zweiten (2) und/oder der dritten Baugruppe (7) durch eine der jeweiligen Baugruppe (2,7) hierarchisch übergeordnete Baugruppe vorgesehen ist.

8. Automatisierungssystem nach einem der vorhergehenden Ansprüche,
**dadurch gekennzeichnet, dass** die erste Baugruppe (1) mit einem Engineeringsystem (11) koppelbar ist, welches zur Programmierung und Projektierung des Automatisierungssystems vorgesehen ist.

9. Verfahren zur Konfiguration eines Automatisierungssystems mit mindestens einer ersten (1) und mindestens einer zweiten Baugruppe (2), wobei die beiden Baugruppen (1,2) in einer hierarchischen Ordnung zueinander stehen und die erste Baugruppe (1) zumindest eine hierarchisch abwärtsgerichtete Schnittstelle (3) aufweist und die zweite Baugruppe (2)
• zumindest eine hierarchisch aufwärtsgerichtete Schnittstelle (4) und
• mindestens eine Beschreibungsdatei (5) mit Informationen über die zweite Baugruppe (2) aufweist, **dadurch** geknnzeichnet, dass die zweite Baugruppe (2)
mindestens einen Gerätetreiber (6), der einen Zugriff auf die zweite Baugruppe (2) durch die erste Baugruppe (1) oder eine der ersten Baugruppe (1) hierarchisch neben- oder übergeordnete Baugruppe ermöglicht,
aufweist, wobei die hierarchisch abwärtsgerichtete Schnittstelle (3) der ersten Baugruppe (1) mit der hierarchisch aufwärtsgerichteten Schnittstelle (4) der zweiten Baugruppe (2) derart gekoppelt wird, dass auf den Gerätetreiber (6) und die Beschreibungsdatei (5) der zweiten Baugruppe (2) von der ersten Baugruppe (1) oder einer der ersten Baugruppe (1) hierarchisch neben- oder übergeordneten Baugruppe zugegriffen wird und die zweite Baugruppe (2) durch die erste Baugruppe (1) oder eine der ersten Baugruppe (1) hierarchisch neben- oder übergeordnete Baugruppe konfiguriert wird.

10. Verfahren nach Anspruch 9,
**dadurch gekennzeichnet, dass** die erste Baugruppe (1) mit Hilfe einer Verarbeitungseinheit (10) den Gerätetreiber (6) der zweiten Baugruppe (2) und/oder der zweiten Baugruppe hierarchisch nebengeordneter Baugruppen (2a,2b) und/oder hierarchisch untergeordneter Baugruppen (7) ausführt.

11. Verfahren nach einem der Ansprüche 9 oder 10,
**dadurch gekennzeichnet, dass** die zweite Baugruppe (2) mit Hilfe einer weitere Verarbeitungseinheit (12) den Gerätetreiber (6) der zweiten Baugruppe (2) ausführt.

12. Verfahren nach einem der Ansprüche 9 oder 11,
**dadurch gekennzeichnet, dass** ein auf der ersten Baugruppe (1) befindlicher generischer Gerätetreiber (17) auf die zweite Baugruppe (2) und/oder eine der zweiten Baugruppe neben-(2a,2b) und/oder untergeordnete Baugruppe (7) adaptiert wird.

13. Verfahren nach einem der Ansprüche 9 bis 12,
**dadurch gekennzeichnet, dass** die Beschreibungsdatei (5) und/oder der Gerätetreiber (6) der zweiten Baugruppe (2) in die erste Baugruppe (1) oder eine der ersten Baugruppe (1) hierarchisch neben- oder übergeordnete Baugruppe geladen wird.

14. Verfahren nach einem der Ansprüche 9 bis 13,
**dadurch gekennzeichnet, dass** die zweite Baugruppe (2) mindestens eine weitere hierarchisch abwärtsgerichtete Schnittstelle (8) aufweist, über die die zweite Baugruppe (2) mit einer dritten Baugruppe (7) mit
• zumindest einer weiteren hierarchisch aufwärtsgerichteten Schnittstelle (9)
• mindestens einer weiteren Beschreibungsdatei (13) mit Informationen über die dritte Baugruppe (7) und
• mindestens einem Gerätetreiber (14), der einen Zugriff auf die dritte Baugruppe (7) durch die zweite Baugruppe (2) oder eine der zweiten Baugruppe (2) hierarchisch neben- oder übergeordnete Baugruppe (1,2a,2b) ermöglicht,
gekoppelt wird und die dritte Baugruppe (7) durch die zweite Baugruppe (2) oder eine der zweiten Baugruppe (2) hierarchisch nebengeordnete Baugruppe (2a,2b) oder übergeordnete Baugruppe (1) konfiguriert wird.

15. Verfahren nach Anspruch 14,
**dadurch gekennzeichnet, dass** die zweite Baugruppe (2) und/oder die dritte Baugruppe (7) im laufenden Betrieb des Automatisierungssystems installiert wird, wobei die zweite (2) und/oder die dritte Baugruppe (7) durch eine der jeweiligen Baugruppe (2,7) hierarchisch übergeordnete Baugruppe in Betrieb genommen wird.

16. Verfahren nach einem der Ansprüche 9 bis 15,
**dadurch gekennzeichnet, dass** die erste Baugruppe (1) mit einem Engineeringsystem (11) gekoppelt wird und das Automatisierungssystem mit dem Engineeringsystem (11) programmiert und projektiert wird.

## Claims

1. Automation system having at least a first (1) and at least a second module (2), wherein the two modules (1, 2) are related to each other in a hierarchical structure and the first module (1) has at least one hierarchically downward-directed interface (3) and the second module (2) has
• at least one hierarchically upward-directed interface (4),
• at least one description file (5) containing information relating to the second module (2), **characterised in that** the second module (2) has
at least one device driver (6) which enables the first module (1) or a hierarchically peer-ranking or higher-ranking module to the first module (1) to access the second module (2), wherein the hierarchically downward-directed interface (3) of the first module (1) can be coupled to the hierarchically upward-directed interface (4) of the second module (2) in such a way that the device driver (6) and the description file (5) of the second module (2) can be accessed by the first module (1) or a hierarchically peer-ranking or higher-ranking module to the first module (1) and a configuration of the second module (2) by the first module (1) or a hierarchically peer-ranking or higher-ranking module to the first module (1) is provided.

2. Automation system according to claim 1,
**characterised in that** the first module (1) has a processing unit (10) which is provided for executing the device driver (6) of the second module (2) and/or hierarchically peer-ranking modules (2a, 2b) to the second module and/or hierarchically lower-ranking modules (7) to the second module.

3. Automation system according to one of claims 1 or 2,
**characterised in that** the second module (2) has a further processing unit (12) which is provided for executing the device driver (6) of the second module (2).

4. Automation system according to one of the preceding claims,
**characterised in that** the first module (1) has a generic device driver (17) which can be adapted to the second module (2) and/or a peer-ranking (2a, 2b) and/or lower-ranking module (7) to the second module.

5. Automation system according to one of the preceding claims,
**characterised in that** the description file (5) and/or the device driver (6) of the second module (2) can be loaded into the first module (1) or a hierarchically peer-ranking or higher-ranking module to the first module (1).

6. Automation system according to one of the preceding claims,
**characterised in that** the second module (2) has at least one further hierarchically downward-directed interface (8) via which the second module (2) can be coupled to a third module (7) having
• at least one further hierarchically upward-directed interface (9),
• at least one further description file (13) containing information relating to the third module (7) and
• at least one device driver (14) which enables the second module (2) or a hierarchically peer-ranking or higher-ranking module (1, 2a, 2b) to the second module (2) to access the third module (7),
and a configuration of the third module (7) by the second module (2) or a hierarchically peer-ranking module (2a, 2b) or higher-ranking module (1) to the second module (2) is provided.

7. Automation system according to claim 6,
**characterised in that** the second module (2) and/or the third module (7) can be installed during live operation of the automation system, a commissioning of the second (2) and/or the third module (7) by a hierarchically higher-ranking module to the respective module (2, 7) being provided.

8. Automation system according to one of the preceding claims,
**characterised in that** the first module (1) can be coupled to an engineering system (11) which is provided for the purpose of programming and configuring the automation system.

9. Method for configuring an automation system having at least a first (1) and at least a second module (2), wherein the two modules (1, 2) are related to each other in a hierarchical structure and the first module (1) has at least one hierarchically downward-directed interface (3) and the second module (2) has
• at least one hierarchically upward-directed interface (4),
• at least one description file (5) containing information relating to the second module (2), **characterised in that** the second module (2) has
at least one device driver (6) which enables the second module (2) to be accessed by the first module (1) or a hierarchically peer-ranking or higher-ranking module to the first module (1), wherein the hierarchically downward-directed interface (3) of the first module (1) is coupled to the hierarchically upward-directed interface (4) of the second module (2) in such a way that the device driver (6) and the description file (5) of the second module (2) are accessed by the first module (1) or a hierarchically peer-ranking or higher-ranking module to the first module (1) and the second module (2) is configured by the first module (1) or a hierarchically peer-ranking or higher-ranking module to the first module (1).

10. Method according to claim 9,
**characterised in that** the first module (1) executes the device driver (6) of the second module (2) and/or hierarchically peer-ranking modules (2a, 2b) and/or hierarchically lower-ranking modules (7) to the second module with the aid of a processing unit (10).

11. Method according to one of claims 9 or 10,
**characterised in that** the second module (2) executes the device driver (6) of the second module (2) with the aid of a further processing unit (12).

12. Method according to one of claims 9 or 11,
**characterised in that** a generic device driver (17) residing on the first module (1) is adapted to the second module (2) and/or a peer-ranking (2a, 2b) and/or lower-ranking module (7) to the second module.

13. Method according to one of claims 9 to 12,
**characterised in that** the description file (5) and/or the device driver (6) of the second module (2) are/is loaded into the first module (1) or a hierarchically peer-ranking or higher-ranking module to the first module (1).

14. Method according to one of claims 9 to 13,
**characterised in that** the second module (2) has at least one further hierarchically downward-directed interface (8) via which the second module (2) is coupled to a third module (7) having
• at least one further hierarchically upward-directed interface (9),
• at least one further description file (13) containing information relating to the third module (7) and
• at least one device driver (14) which enables the third module (7) to be accessed by the second module (2) or a hierarchically peer-ranking or higher-ranking module (1, 2a, 2b) to the second module (2),
and the third module (7) is configured by the second module (2) or a hierarchically peer-ranking module (2a, 2b) or higher-ranking module (1) to the second module (2).

15. Method according to claim 14,
**characterised in that** the second module (2) and/or the third module (7) is installed during live operation of the automation system, with the second (2) and/or the third module (7) being placed into operation by a hierarchically higher-ranking module to the respective module (2, 7).

16. Method according to one of claims 9 to 15,
**characterised in that** the first module (1) is coupled to an engineering system (11) and the automation system is programmed and configured by means of the engineering system (11).

## Revendications

1. Système d'automatisation comportant au moins un premier module (1) et au moins un deuxième module (2), les deux modules (1, 2) étant placés dans un ordre hiérarchique l'un par rapport à l'autre et le premier module (1) comportant au moins une interface (3) hiérarchiquement en aval et le deuxième module (2) comportant
au moins une interface (4) hiérarchiquement en amont et
au moins un fichier de description (5) comportant des informations sur le deuxième module (2), **caractérisé en ce que** le deuxième module (2) comporte
au moins un pilote d'appareil, (6) qui permet au premier module (1) ou à un module hiérarchiquement plus haut ou au même niveau que le premier module (1) d'accéder au deuxième module (2),
l'interface (3), hiérarchiquement en aval, du premier module (1) pouvant être couplée à l'interface (4), hiérarchiquement en amont, du deuxième module (2) de sorte que le pilote d'appareil (6) et le fichier de description (5) du deuxième module (2) sont accessibles au premier module (1) ou à un module hiérarchiquement plus haut ou au même niveau que le premier module (1) et une configuration du deuxième module (2) pouvant être effectuée par le premier module (1) ou un module hiérarchiquement plus haut ou au même niveau que le premier module (1).

2. Système d'automatisation selon la revendication 1, **caractérisé en ce que** le premier module (1) comporte une unité de traitement (10), qui est destinée à réaliser le pilote d'appareil (6) du deuxième module (2) et/ou de modules (2a, 2b) hiérarchiquement au même niveau, et/ou de modules (7) hiérarchiquement plus bas, que le deuxième module.

3. Système d'automatisation selon l'une des revendications 1 ou 2, **caractérisé en ce que** le deuxième module (2) comporte une autre unité de traitement (12), qui est destinée à réaliser le pilote d'appareil (6) du deuxième module (2).

4. Système d'automatisation selon l'une des revendications précédentes, **caractérisé en ce que** le premier module (1) comporte un pilote d'appareil générique (17), qui peut être adapté au deuxième module (2) et/ou à un module (2a, 2b) du même niveau que le deuxième module et/ou à un module (7) plus bas que le deuxième module.

5. Système d'automatisation selon l'une des revendications précédentes, **caractérisé en ce que** le fichier de description (5) et/ou le pilote d'appareil (6) du deuxième module (2) peut être chargé dans le premier module (1) ou dans un module hiérarchiquement plus haut ou du même niveau que le premier module (1).

6. Système d'automatisation selon l'une des revendications précédentes, **caractérisé en ce que** le deuxième module (2) comporte au moins une autre interface (8), hiérarchiquement en aval, qui permet de coupler le deuxième module (2) à un troisième module (7) comportant
- au moins une autre interface (9) hiérarchiquement en amont,
- au moins un autre fichier de description (13) comportant des informations sur le troisième module (7) et
- au moins un pilote d'appareil (14) qui permet au deuxième module (2) ou à un module (1, 2a, 2b), hiérarchiquement plus haut ou de même niveau que le deuxième module (2), d'accéder au troisième module (7),
et **en ce qu'**une configuration du troisième module (7) peut être effectué par le deuxième module (2) ou par un module (2a, 2b) hiérarchiquement du même niveau que le deuxième module (2) ou par un module (1) hiérarchiquement plus haut que le deuxième module (2).

7. Système d'automatisation selon la revendication 6, **caractérisé en ce que** le deuxième module (2) et/ou le troisième module (7) peuvent être installés lorsque le système d'automatisation est en fonctionnement, une mise en service du deuxième module (2) et/ou du troisième module (7) étant effectuée par un module hiérarchiquement plus haut que le module respectif (2, 7).

8. Système d'automatisation selon l'une des revendications précédentes, **caractérisé en ce que** le premier module (1) peut être couplé à un système d'ingénierie (11) qui est destiné à programmer et projeter le système d'automatisation.

9. Procédé de configuration d'un système d'automatisation comportant au moins un premier module (1) et au moins un deuxième module (2), les deux modules (1, 2) étant placés dans un ordre hiérarchique l'un par rapport à l'autre et le premier module (1) comportant au moins une interface (3) hiérarchiquement en aval et le deuxième module (2) comportant
- au moins une interface (4) hiérarchiquement en amont et
- au moins un fichier de description (5) comportant des informations sur le deuxième module (2), **caractérisé en ce que** le deuxième module (2) comporte
au moins un pilote d'appareil (6) qui permet au premier module (1) ou à un module hiérarchiquement plus haut ou de même niveau que le premier module (1) d'accéder au deuxième module (2),
l'interface (3), hiérarchiquement en aval, du premier module (1) étant couplée à l'interface (4), hiérarchiquement en amont, du deuxième module (2) de telle sorte que le premier module (1) ou un module hiérarchiquement plus haut ou de même niveau que le premier module (1) a accès au pilote d'appareil (6) et au fichier de description (5) du deuxième module (2) et le deuxième module (2) étant configuré par le premier module (1) ou par un module hiérarchiquement plus haut ou de même niveau que le premier module (1).

10. Procédé selon la revendication 9, **caractérisé en ce que** le premier module (1) réalise, à l'aide d'une unité de traitement (10), le pilote d'appareil (6) du deuxième module (2) et/ou de modules (2a, 2b) hiérarchiquement de même niveau que le deuxième module et/ou de modules (7) hiérarchiquement plus bas que le deuxième module.

11. Procédé selon l'une des revendications 9 ou 10, **caractérisé en ce que** le deuxième module (2) réalise, à l'aide d'une autre unité de traitement (12), le pilote d'appareil (6) du deuxième module (2).

12. Procédé selon l'une des revendications 9 ou 11, **caractérisé en ce qu'**un pilote d'appareil générique (17), se trouvant dans le premier module (1), est adapté au deuxième module (2) et/ou à un module (2a, 2b) de même niveau que le deuxième module et/ou à un module (7) plus bas que le deuxième module.

13. Procédé selon l'une des revendications 9 à 12, **caractérisé en ce que** le fichier de description (5) et/ou le pilote d'appareil (6) du deuxième module (2) est chargé dans le premier module (1) ou dans un module hiérarchiquement de même niveau ou plus haut que le premier module (1).

14. Procédé selon l'une des revendications 9 à 13, **caractérisé en ce que** le deuxième module (2) comporte au moins une autre interface (8), hiérarchiquement en aval, qui permet de coupler le deuxième module (2) à un troisième module (7) comportant
- au moins une autre interface (9) hiérarchiquement en amont,
- au moins un autre fichier de description (13), comportant des informations sur le troisième module (7) et
- au moins un pilote d'appareil (14), qui permet au deuxième module (2) ou à un module (1, 2a, 2b) hiérarchiquement plus haut ou de même niveau que le deuxième module (2) d'accéder au troisième module (7),
et le troisième module (7) étant configuré par le deuxième module (2) ou par un module (2a, 2b) hiérarchiquement de même niveau que le deuxième module (2) ou par un module (1) hiérarchiquement plus haut que le deuxième module (2).

15. Procédé selon la revendication 14, **caractérisé en ce que** le deuxième module (2) et/ou le troisième module (7) est installé pendant que le système d'automatisation est en fonctionnement, le deuxième module (2) et/ou le troisième module (7) étant mis en service par un module hiérarchiquement plus haut que le module respectif (2, 7).

16. Procédé selon l'une des revendications 9 à 15, **caractérisé en ce que** le premier module (1) est couplé à un système d'ingénierie (11) et le système d'automatisation est programmé et projeté par le système d'ingénierie (11).
